(19) Europäisches Patentamt
European Patent Office
Office européen des brevets

(11) Publication number: **0 070 119**
**B1**

(12) # EUROPEAN PATENT SPECIFICATION

(45) Date of publication of patent specification: **08.03.89**

(51) Int. Cl.$^4$: **G 06 F 7/22**

(21) Application number: **82303395.6**

(22) Date of filing: **29.06.82**

(54) **Join operation processing system in relational model.**

(30) Priority: **30.06.81 JP 101490/81**

(43) Date of publication of application:
**19.01.83 Bulletin 83/03**

(45) Publication of the grant of the patent:
**08.03.89 Bulletin 89/10**

(84) Designated Contracting States:
**DE FR GB**

(56) References cited:
**IBM JOURNAL OF RESEARCH AND DEVELOPMENT, Vol. 23, No. 3, May 1979, NEW YORK, (US). Pages 286-298. R. A. LORIE et al.: "An access specification language for a relational data base system".**
**REVIEW OF THE ELECTRICAL COMMUNICATION LABORATORIES, Vol. 29, No. 1-2, January/February 1981, TOKYO, (JP). Pages 32-50. S. HANATA et al.: "Conversational database query language".**

(73) Proprietor: **FUJITSU LIMITED**
**1015, Kamikodanaka Nakahara-ku**
**Kawasaki-shi Kanagawa 211 (JP)**

(72) Inventor: **Kitakami, Hazime**
**FUJITSU LIMITED Patent Dept. 1015**
**Kamikodanaka**
**Nakahara-ku Kawasaki-shi Kanagawa 211 (JP)**
Inventor: **Ishikawa, Hiroshi**
**FUJITSU LIMITED Patent Dept. 1015**
**Kamikodanaka**
**Nakahara-ku Kawasaki-shi Kanagawa 211 (JP)**
Inventor: **Tezuka, Masayoshi**
**FUJITSU LIMITED Patent Dept. 1015**
**Kamikodanaka**
**Nakahara-ku Kawasaki-shi Kanagawa 211 (JP)**
Inventor: **Adachi, Susumu**
**FUJITSU LIMITED Patent Dept. 1015**
**Kamikodanaka**
**Nakahara-ku Kawasaki-shi Kanagawa 211 (JP)**
Inventor: **Makinouchi, Akifumi**
**FUJITSU LIMITED Patent Dept. 1015**
**Kamikodanaka**
**Nakahara-ku Kawasaki-shi Kanagawa 211 (JP)**

(74) Representative: **Sunderland, James Harry et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 070 119 B1**

(56) References cited:
COMMUNICATIONS OF THE ACM, Vol. 18, No. 10, October 1975, NEW YORK, (US). Pages 568-579. J.M. SMITH et al.: "Optimizing the performance of a relational algebra database interface".

IEEE TRANSACTIONS ON COMPUTERS, Vol. C-28, No. 6, June 1979, NEW YORK, (US). Pages 395-405. D.J. DE WITT: "DIRECT - a multiprocessor organization for supporting relational database management systems".

AFIPS CONFERENCE PROCEEDINGS 1981 NATIONAL COMPUTER CONFERENCE, CHICAGO, ILLINOIS (US) May 4-7, 1981 AFIPS PRESS, ARLINGTON, VIRGINIA (US). Pages 507-513 S. HIKITA et al.: "Optimization of the file access method in content-addressable database access machine".

**Description**

The present invention relates to the join operation processing system in a relational model.

Join operations form part of relational algebra and are explained e.g. in a paper by J. M. Smith et al. in COMMUNICATIONS OF THE ACM, October 1975, pages 568—579: "Optimising the performance of a relational algebra database interface". The paper describes various ways in which the basic operations JOIN, SELECT and PROJECT can be combined and indicates the tradeoffs in processing speed involved.

In a data processing system utilizing a data base, data is often held in tables, as shown in Fig. 1(A), (B).

In Fig. 1, 1 indicates an employee A table (EMPA) listing information relating to employees. The employee A table 1 provides, for example, fields 2-1 to 2-4, respectively, for employee number (ENO), employee name (NAME), department number (DNO) and salary (SAL). In the employee A table 1, for example, "70101, Yamada, 005, $a_1$" is called a tuple, and table 1 provides tuples 3-1, 3-2, ... etc.

In addition, in Fig. 1, 4 is a department A table (DEPTA) which is one of the tables of the data base relating to departments. The department A table 4 provides, for example, fields 5-1 to 5-3, respectively for department number (DNO), department name (DNAME) and location (LOC) and also provides a plurality of tuples 6-1, 6-2, ... etc.

The tuples in the employee A table 1 and the department A table 4 are often not sorted in an ascending sequence or a descending sequence in regard to a field which is now going to be join processed, for example the department number (DNO) fields 2-3 and 5-1 are not sorted into such a sequence. Of course, it is natural that a sorted relationship is desirable for execution of join processing and the present invention uses such sorted results.

In general, although not sorted differently from the above condition, certain kinds of table, among those indicated above, are provided with an index table 7 for a field used with a high frequency, as shown in Fig. 1(C).

Namely, the index table 7 indicated in Fig. 1(C) is an index (in order of department number) prepared for the department field (DNO) 2-3 in the employee A table 1. An index of this kind has information pairs 8-1, 8-2, ... etc., each information pair providing, in the case of Fig. 1(C), a department number (DNO) and a tuple identifier, for example, the addresses *1, *2, ... where the tuple with the pertinent department numbers exist on the employee A table 1. In the pertinent index, as shown in Fig. 1(C), the department number (DNO) is held, for example, in a form sorted in ascending order and if the desired department number (DNO) i is designated, it is possible to directly extract the corresponding information pair 8-i from the index table 7. Existence of such index 7 is equivalent to having a part of the department field (DNO) 2-3 in the employee A table 1 sorted and the present invention also uses the index of this kind.

The join processing in the present invention may be thought of as corresponding to the generation of a table having a new tuple, for example, by linking equivalent tuples, that is tuples having a department number (DNO) in the employee A table 1 with the tuple having the department number (DNO) in the department A table 4.

When performing the join processing operation, for example, it is checked whether or not the department number "020" corresponding to the department number "020" on the department A table 4 exists in the employee A table 1 by using the sorted table or index as explained above. When the department number exists, the tuples, for example 6-3, 3-2 having the department number "020" of both tables are linked. For the above-mentioned join processing, it is very effective to utilize the sorted table or index as explained above, but, for example, when a user desires that the department number (DNO) having a value "10" to "30" should be joined, join processing is required only for tuples within the range of pertinent values and the processing speed is still unduly limited if processing is not carried out by limiting the tuples considered as an object of the join processing operation.

Presently, the following processing systems are used within the join processing field. Namely,

(A) A system for obtaining an answer by sequentially scanning an index which exists for the join of fields of pertinent tables.

(B) A system for obtaining an answer by sorting each tuple focusing on the join field when the index does not exist and by scanning the sorted result.

(C) A system combining systems (A) and (B).

(D) A system for obtaining an answer satisfying the join predicate by executing the Cartesian operation for each relation.

But as explained above, it is still probable that reference to unwanted data will still occur, resulting in an undue limitation in the operation speed.

An embodiment of the present invention can realize join processing speedily by limiting the joined tuples to a minimum range. In an embodiment of the present invention, the join operation processing system in a relational model relates to a data processing system where a data base storing a plurality of tables having a plurality of fields respectively is provided. A pertinent index table is held in such a manner that one or a plurality of fields in the index table are arranged in accordance with an ascending or descending sequence corresponding to one or a plurality of tables among the tables, and processings are executed by providing a data base processing mechanism and using the tables on the data base.

The data base processing mechanism provides at least maximum/minimum calculation execution means having a function which preliminarily judges the tuple extraction range for the join field in the join object table based on a join predicate described by users and the dictionary information of the index which can be utilized for said join processing, reduction sort execution means which sorts one of the unsorted tables among the join object tables or one of the tables which cannot use the index based on the preliminarily judged extraction range mentioned above and executes the sorting for the next table based on the extraction range limited by said sorting, and join calculation execution means which executes the join processing by extracting the join object tuples for the join object table utilizing the extraction range extracted by the pertinent index for the table which can use the index and the extraction range of table sorted by the reduction sort execution means; whereby the join processing instructed by users is executed on the basis of limited tuples of the join object table.

An embodiment of the present invention provides a join operation processing system in a relational model where, on the occasion of a join operation for generating a new table linking the tuples of a plurality of pertinent tables focusing on a common field or fields between tables having a plurality of fields, the minimum extraction range for determining the tuples to be processed is determined in regard to the join field or plurality of join fields for each table which is considered as the object of the join operation, and the operation rate is thereby improved by omitting processings which refer to unwanted data, as far as possible.

Reference is made, by way of example, to the drawings, in which:—

Fig. 1 explains the concepts of table, field, tuple and index in the present invention;

Fig. 2 illustrates the structure of an embodiment of the present invention;

Fig. 3 illustrates processing performed by the data base processing mechanism shown in Fig. 2;

Fig. 4 illustrates the flow of processing for Fig. 3; and

Fig. 5 to Fig. 7 show detail processing flows of the data base processing mechanism shown in Fig. 2 for the processing of Fig. 3.

In the embodiment shown in Fig. 2, reference numerals 1, 4, 7 correspond to those in Fig. 1. 9 is a data processing system, 10 is an input/output control system, 11-0 is a table memory, 11-1 is an index memory, 12 is a data base processing mechanism, 13 is a data access mechanism, 14 is a join operation controller, 15 is an interpretation execution part, 16 is a reduction sort execution part, 17 is a join operation execution part, 21 is a maximum/minimum calculation execution part.

The data processing part includes program modules to be executed by the data base processing mechanism 12 within the corresponding memory and executes the functions of data base processing mechanism 12 in such a form as executing the pertinent module. This data processing part 9 executes the desired processings by fetching the data, as required, in the table memory 11-0 and index memory 11-1 to said memory and stores the data as required within each memory 11-0 or 11-1.

The data base processing mechanism 12 includes at least the join operation controller 14 and interpretation execution part 15. The join operation controller 14 executes processing such as identifying the type of join predicates described by users, determination of join processing sequence and selection of access path, etc., and controls the processings of the interpretation execution part 15. Morever, the interpretation execution part 15 comprises the reduction sort execution part 16, join operation execution part 17 and the maximum/minimum calculation execution part 21 and has a function to interpret the instructions issued by users and to execute the corresponding processings. The maximum/minimum calculation execution part 21 provides the function of preliminarily judging the tuple extraction range for the join object table, as explained later by referring to Fig. 3, from the join predicate described by the user given for the join processing and the dictionary information for the index to be used.

The reduction sort execution part 16 executes, as explained later by referring to Fig. 3, the sort for the unsorted tables and those other tables which cannot use the index while limiting the extraction range of relations required for the join processing. Moreover, the join operation execution part 17 uses the sorted tables and index, extracts the tuples within extraction range in the finally limited form and executes the join processing instructed by users.

Fig. 3 illustrates processings in the data base processing mechanism of Fig. 2.

Here it is supposed that the following instructions are given, for example, by the user in the situation that the tables, 1, 4 and index 7 as shown in Fig. 1 exist.

```
GET   ENO, NAME, DEPTA. DNO, DNAME
FROM  EMPA, DEPTA
WHERE EMPA. DNO=DEPTA. DNO
AND       10=DEPTA. DNO=30
AND       LOC='KANAGAWA'.
```

These instructions require the generation of a join object table, having new tuples each including the employee number (ENO), employee name (NAME), department number (DNO) and department name (DNAME) in regard to the department which is located at Kanagawa Prefecture and has the department numbers (DNO) ranging from "10" to "30" by utilizing the table (EMPA) 1 and the table (DEPTA) 4 with the department numbers (DNO) of both tables used as the join field. Conditions enclosed by the dotted line correspond to the join predicate.

When an index table 7 as shown in Fig. 1(C) exists, the range

$$5 \leq DNO \leq 100$$

is available with regard to the index dictionary information. The maximum/minimum calculation execution part 21 receives the information 18 shown in Fig. 3 from the join predicate and index dictionary information. It also determines that there is an index table 7 having a range including the conditions

$$10 \leq DNO \leq 30$$

in the join predicate in the employee A table (EMPA) 1 and also determines that no sorting is carried out for the department number (DNO) in the deparment A table (DEPTA) 4. It moreover detects that LOC='Kanagawa' is the condition for sorting of the department A tbale (DEPTA) 4.

As a result, the maximum/minimum calculating execution part 21 sends instructions indicating that the tuples which are the sort object for the table 4 have the following condition (1) to the reduction sort execution part 16 for performing the necessary sorting.

$$10 \leq DNO \leq 30 \text{ and } LOC = \text{Kanagawa}. \quad (1)$$

The reduction sort execution part 16 carries out the necessary sorting, for example, like the sorted result 19 shown in the Figure 3 for the tuples having above condition (1) in the table 4. When the department number (DNO) is in the range from the minimum number of "20" to the maximum number of "30" in this sorted result 19, above-mentioned condition

$$10 \leq DNO \leq 30 \quad (2)$$

is further converged to

$$20 \leq DNO \leq 30. \quad (3)$$

In addition, if there is unsorted table, the sorting is carried out with respect to condition (3) for the pertinent unsorted table. In the case of the above example, the index table 7 can be used for the table 1 and therefore the join operation execution part 17 is instructed to execute the join processing from both table 1 and table 4 based on the above-mentioned condition (3) after the end of sort processing.

The join execution part 17 extracts the desired tuple from the table 1 using the address from index table 7 corresponding to the table (EMPA) 1 and meanwhile generates the join object table 20 shown in Fig. 3 by using the sorted information 19 for the table (DEPTA) 4. Namely, it generates a new table 20 including the tuples having the employee number (ENO), employee name (ENAME), department number (DNO) and department name (DNAME).

Fig. 4 shows the embodiment of Fig. 3 as a flow of processings.

In the maximum/minimum calculation processing, conditions

$$[10 \leq DNO \leq 30]$$

and [ID dictionary information

$$5 \leq DNO \leq 100]$$

are input and [DNO (min, max)=(10, 30)] is output.

In the reduction sort operation processing, conditions [DEPTA table] and [LOC=Kanagawa] are input, and [sort table DEPTA], [DNO (min, max)=(20, 30)] are output.

In the join operation processing, conditions [EMPA table], [ID index], [sort table DEPTA'] and [DNO (min, max)=(20, 30)] are input and [retrieval result table] is output.

Fig. 5 shows the detail processing flow of the maximum/minimum calculation execution part 21 (shown in Fig. 2) in the embodiment of Fig. 3.

Fig. 6 shows detail processing flow of the reduction sort execution part 16 (shown in Fig. 2) in the embodiment of Fig. 3.

Fig. 7(A) and 7(B) show detail processing flow of the join operation execution part 17 (shown in Fig. 2) in the embodiment of Fig. 3.

The processing cam thus be focused only on the minim data obtained by the above-mentioned processing and the time required for join processing can be drastically curtailed.

Explained above is the so-called field join where join is carried out focusing on one field (DNO in the case of the Figure) in the respective tables, but it goes without saying that the present invention can be applied to so-called tuple join where the join is carried out mainly for combination of a plurality of fields.

The above join processing can also be used for a high-speed correlation operation such as

```
GET    DNO, DNAME
FROM   10 COUNT (ENO FROM
       EMPA WHERE DNO=D. DNO)
                         (correlation)
```

instructing, for example, "Find the department names (DNAME) where the number of employees is 10 persons or less using the DPTA and EMPA".

Moreover, for example the join processing can also be applied to execution where a membership relation predicate is converted to a correlation predicate in a case where an instruction is given such as, "Obtain the names and salaries of persons in the departments in Kanagawa Prefecture having 70000 employees or less". (Detailed explanation is omitted since the operation has been previously explained for a more complicated predicate). In addition, although detailed explanation is also omitted, this join processing method can be applied for the operation of obtaining the intersection set in accordance with set theory.

As explained above, the present invention realizes the join processing operation only by extracting the minimum data and therefore reduces reference to unwanted data, thus drastically improving processing speed.

While the present invention has been described with respect to a specific embodiment thereof, it is to be understood that the present invention is not limited thereto in any way but covers any and all changes and modifications which will become possible within the scope of the appended claims.

**Claim**

A join operation processing system responsive to user instructions for performing join operations in a relational model in a data processing system in which a data base stores a plurality of data tables, each data table comprising a plurality of information fields with a plurality of data entries within each field, and further stories pertinent index tables arranged such that entries in each index table are in an ascending or descending sequence, the entries in the index table corresponding to the data entries in an information field in one or a plurality of said data tables and storing dictionary information for each table defining the information fields, and in which system processings are executed by providing a data base processing mechanism and using said tables of said data base, characterized in that:

said data base processing mechanism comprises at least:—

maximum/minimum calculation execution means for prelimarily judging a tuple extraction range for a join field in a join object table based on a join predicate described by users and the dictionary information for the index table which can be utilized for said join processing;

reduction sort execution means for sorting one of unsorted tables or one of the tables which cannot use the index tables based on the preliminarily judged tuple extraction range for executing the sorting for a succeeding table based on the extraction range limited by the sorting by said reduction sort execution means; and

join calculation execution means for executing join processing by extracting the join object tuple for the join object table based on the extraction range for the index table for the table which can use the index and the extraction range of the table sorted by said reduction sort execution means; whereby

the processing instructed by users is executed on the basis of the limited relationship defined by the join object table.

**Patentanspruch**

Verknüpfungsoperations-Verarbeitungssystem, das auf Benutzerbefehle anspricht, um Verknüpfungsoperationen in einem relationalen Modell in einem Datenverarbeitungssystem durchzuführen, in welchem eine Datenbank eine Vielzahl von Datentabellen speichert, jede Datentabelle eine Vielzahl von Informationsfeldern umfaßt, mit einer Vielzahl von Dateneinträgen innerhalb jedes Feldes, und ferner zugehörige Indextabellen speichert, die so angeordnet sind, daß Einträge in jede Indextabelle in ansteigender oder absteigender Folge sind, wobei die Einträge in der Indextabelle den Dateneinträgen in einem Informationsfeld in einem oder einer Vielzahl von genannten Datentaben entsprechen und Verzeichnisinformation für jede Tabelle speichern, die die Informationsfelder begrenzt, und bei welchem System Verarbeitungen ausgeführt werden, in dem ein Datenbankverarbeitungsmechanismus vorgesehen wird und die genannten Tabellen der genannten Datenbank verwendet werden, dadurch gekennzeichnet, daß

der genannten Datenbankverarbeitungsmechanismus wenigstens umfaßt:—

eine Maximum/Minimum-Kalkulationsausführungseinrichtung, um einen Datensatzextraktionsbereich für ein Verknüpfungsfeld in einer Verknüpfungsobjekttabelle, basierend auf einem Verknüpfungsprädikat, das durch Benutzer beschrieben wird, und die Verzeichnisinformation für die Indextabelle, die für die genannte Verknüpfungsverarbeitung verwendet werden kann, vorläufig zu beurteilen;

eine Reduktionssortierausführungseinrichtung, um eine von unsortierten Tabellen oder eine der Tabellen, die nicht die Indextabelle verwenden kann, basierend auf dem vorläufig beurteilten Datensatzextraktionsbereich zu sortieren, um das Sortieren für eine folgende Tabelle, basierend auf dem Extraktionsbereich, der durch Sortieren durch die genannte Reduktionssortierungsausführungseinrichtung begrenzt ist, auszuführend; und

eine Verknüpfungsbereichnungsausführungseinrichtung zur Ausführung von Verknüpfungsverarbeitungen durch Extraktion des Verknüpfungsobjekt-Datensatzes für die Verknüpfungsobjekttabelle, basierend auf dem Extraktionsbereich für die Indextabelle für die Tabelle, die den Index und den Extraktionsbereich der Tabelle verwenden kann, die durch die Reduktionssortierausführungseinrichtung sortiert ist; wodurch

die durch den Benutzer befohlene Verarbeitung auf der Basis der limitierten Relation ausgeführt wird, die durch die Verknüpfungsobjekttabelle definiert ist.

**Revendication**

Système de traitement d'opérations d'union répondant à des instructions d'utilisateurs, de manière à effectuer des opérations d'union d'un modèle relationnel dans un système de traitement de données, da lequel une base de données emmagasine plusieurs tables de données, chaque table de données comprenant plusieurs zones d'information qui contiennent chacune plusieurs groupes de données, et emmagasine en outre des tables d'index pertinents rangées de façon que les paramètres de chaque table d'index soient dans un ordre ascendant ou descendant, les paramètres de la table d'index correspondant aux groupes de données d'une zone d'information dans une ou plusieurs desdites tables de données et emmagasinant une information de dictionnaire pour chaque table définissant les zones d'information, et dans lequel système des traitements sont exécutés par fourniture d'un mécanisme de traitement de base de données et utilisation desdites tables de ladite base de données,

caractérisé en ce que:

ledit mécanisme de traitement de base de données comprend au moins:

un moyen d'exécution de calcul maximal/minimal servant à déterminer préalablement un intervalle d'extraction de n-uplets relatif à une zone d'union dans une table d'objets d'union sur la base d'un prédicat d'union décrit par les utilisateurs et de l'information de dictionnaire relative à la table d'index qui peut être utilisée pour ledit traitement d'union;

un moyen d'exécution de triage de réduction servant à trier l'une des tables non triées ou l'une des tables ne pouvant pas utiliser les tables d'index sur la base de l'intervalle d'extraction de n-uplets préalablement prédéterminé afin d'exécuter le triage relatif à une table suivante sur la base de l'intervalle d'extraction délimité par le triage effectué par ledit moyen d'exécution de triage de réduction; et

un moyen d'exéuction de calcul d'union servant à exécuter le traitement d'union par extraction du n-uplet objet d'union relativement à la table d'objets d'union sur la base de l'intervalle d'extraction relatif à la table d'index pour la table qui peut utiliser l'index et de l'intervalle d'extraction de la table triée par ledit moyen d'exécution de triage de réduction;

si bien que le traitement demandé par les utilisateurs est exécuté sur la base de la relation limitée définie par la table d'objets d'union.

Fig. 1

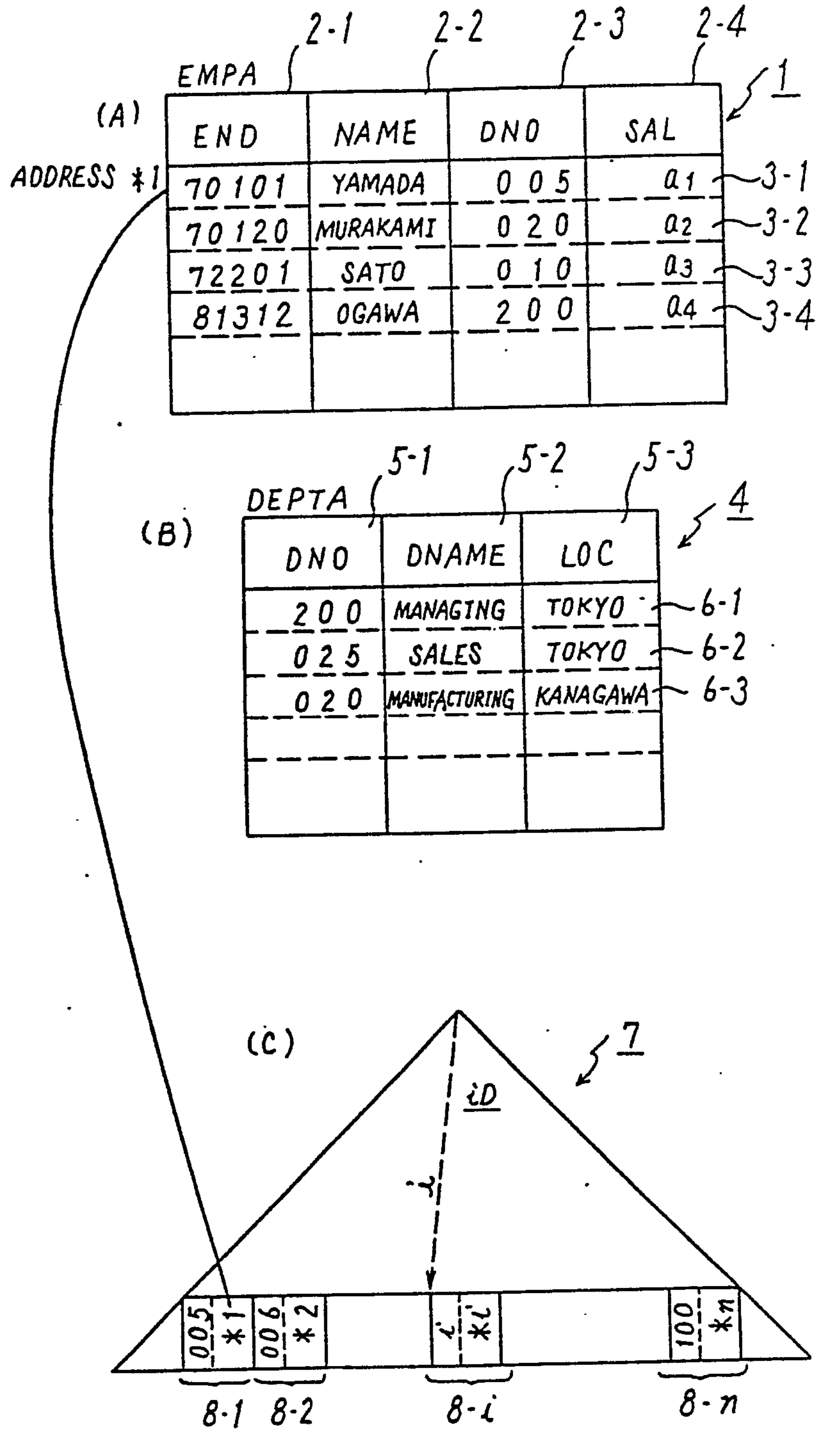
(A)
EMPA
2-1
2-2
2-3
2-4
1
END
NAME
DNO
SAL
ADDRESS *1
70101
YAMADA
005
a1
3-1
70120
MURAKAMI
020
a2
3-2
72201
SATO
010
a3
3-3
81312
OGAWA
200
a4
3-4
(B)
DEPTA
5-1
5-2
5-3
4
DNO
DNAME
LOC
200
MANAGING
TOKYO
6-1
025
SALES
TOKYO
6-2
020
MANUFACTURING
KANAGAWA
6-3
(C)
7
iD
i
005
*1
006
*2
i
*i
100
*n
8-1
8-2
8-i
8-n

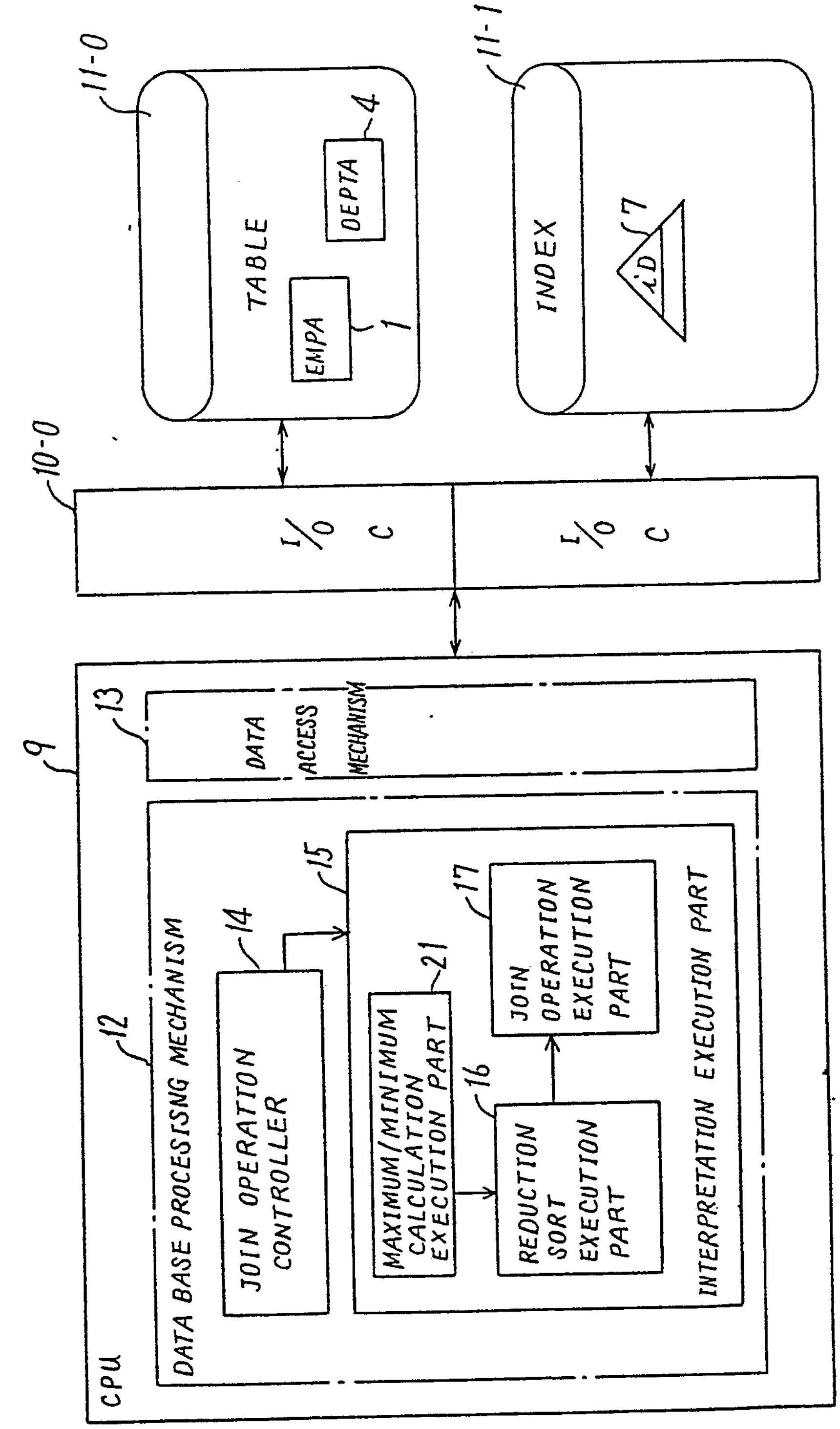
11-0
11-1
TABLE
EMPA
1
DEPTA
4
INDEX
iD
7
10-0
10-1
I/O C
I/O C
9
CPU
13
DATA ACCESS MECHANISM
12
DATA BASE PROCESISNG MECHANISM
14
JOIN OPERATION CONTROLLER
15
INTERPRETATION EXECUTION PART
21
MAXIMUM/MINIMUM CALCULATION EXECUTION PART
16
REDUCTION SORT EXECUTION PART
17
JOIN OPERATION EXECUTION PART

Fig. 2

Fig. 3

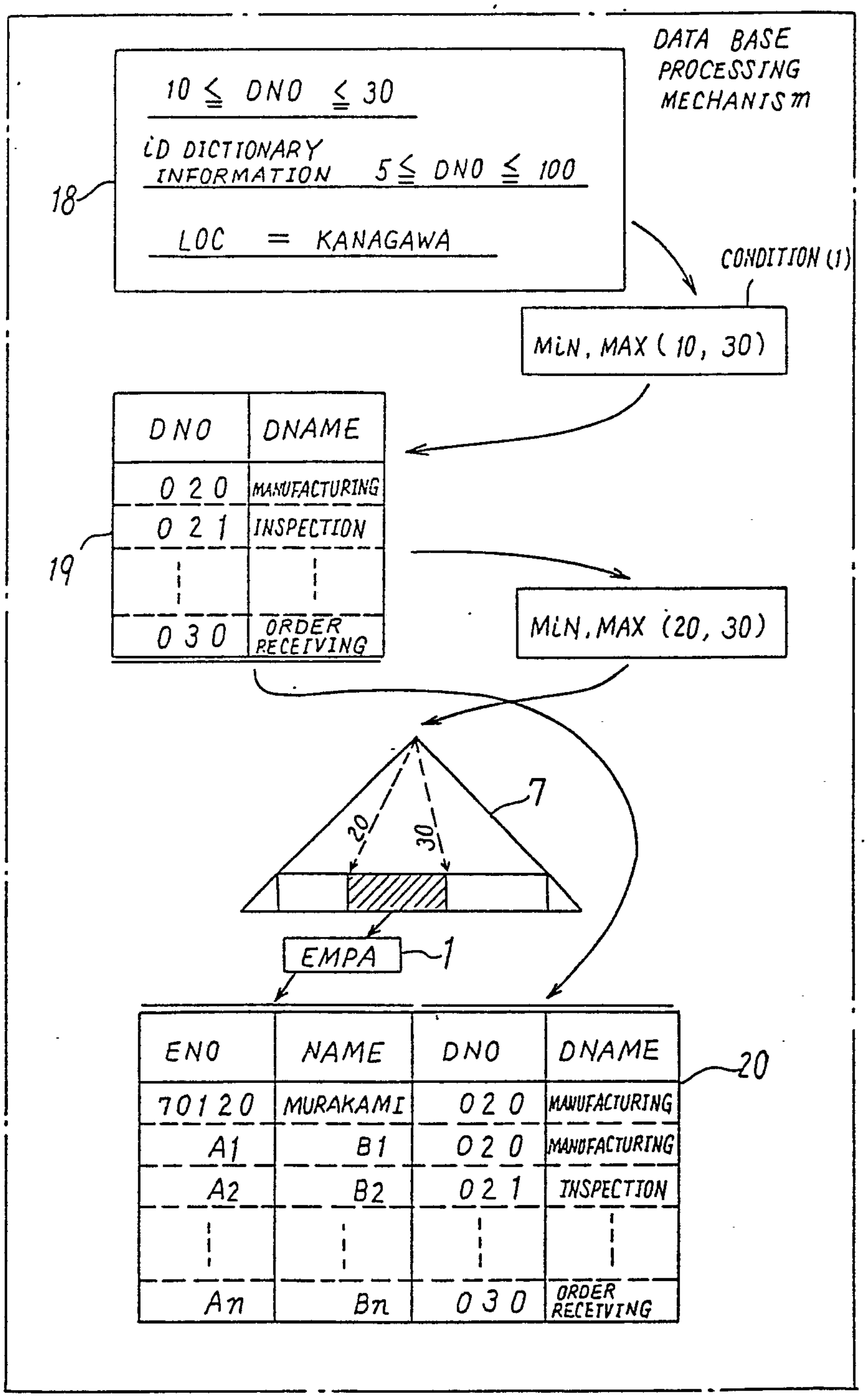
DATA BASE PROCESSING MECHANISM
10 ≦ DNO ≦ 30
iD DICTIONARY INFORMATION 5 ≦ DNO ≦ 100
LOC = KANAGAWA
18
CONDITION (1)
MiN, MAX (10, 30)
DNO
DNAME
0 2 0
MANUFACTURING
0 2 1
INSPECTION
0 3 0
ORDER RECEIVING
19
MiN, MAX (20, 30)
7
20
30
EMPA
1
ENO
NAME
DNO
DNAME
70120
MURAKAMI
0 2 0
MANUFACTURING
A1
B1
0 2 0
MANUFACTURING
A2
B2
0 2 1
INSPECTION
An
Bn
0 3 0
ORDER RECEIVING
20

Fig. 4

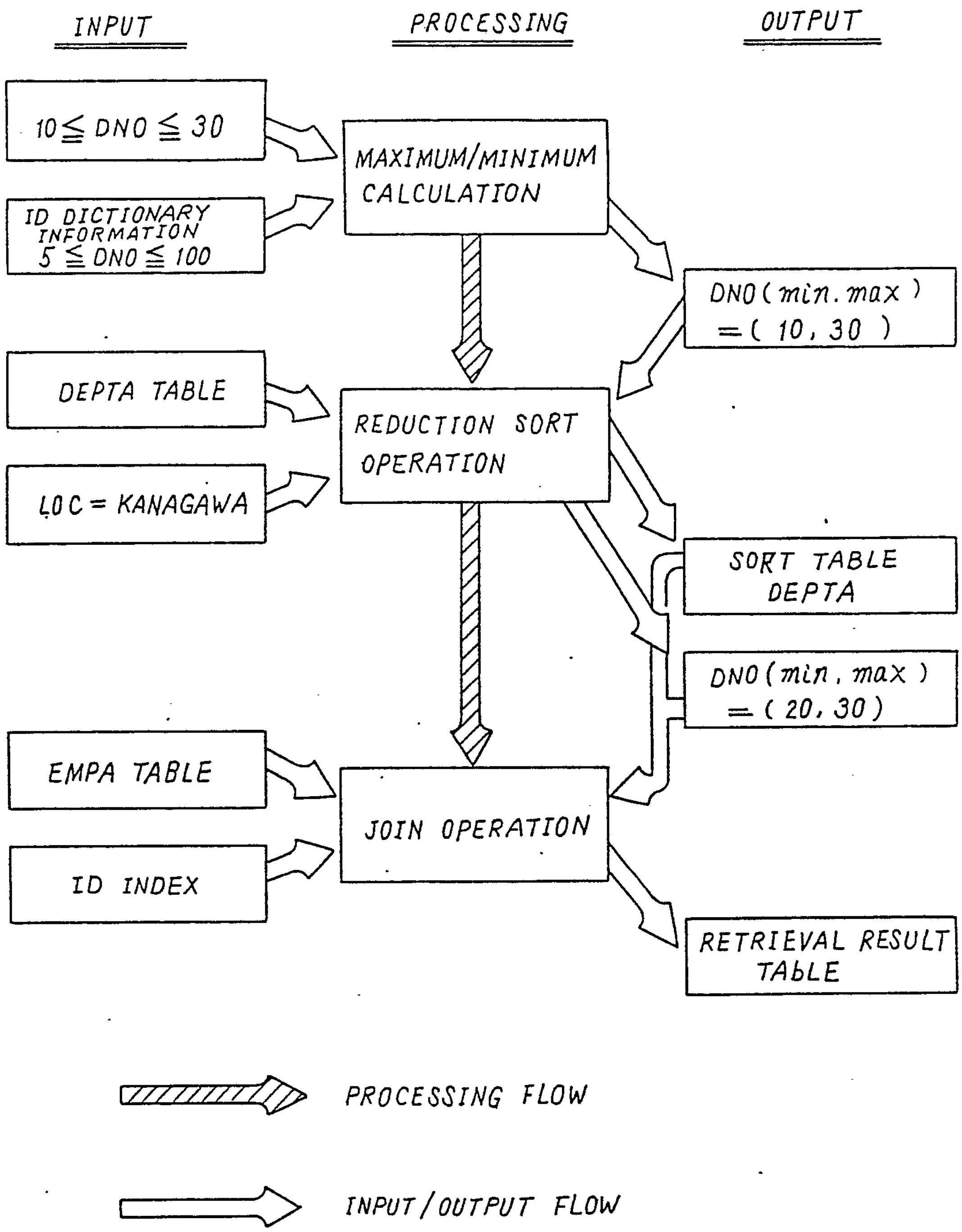
INPUT
PROCESSING
OUTPUT
10 ≦ DNO ≦ 30
ID DICTIONARY INFORMATION 5 ≦ DNO ≦ 100
MAXIMUM/MINIMUM CALCULATION
DNO (min. max) = (10, 30)
DEPTA TABLE
LOC = KANAGAWA
REDUCTION SORT OPERATION
SORT TABLE DEPTA
DNO (min, max) = (20, 30)
EMPA TABLE
ID INDEX
JOIN OPERATION
RETRIEVAL RESULT TABLE
PROCESSING FLOW
INPUT/OUTPUT FLOW

Fig. 5

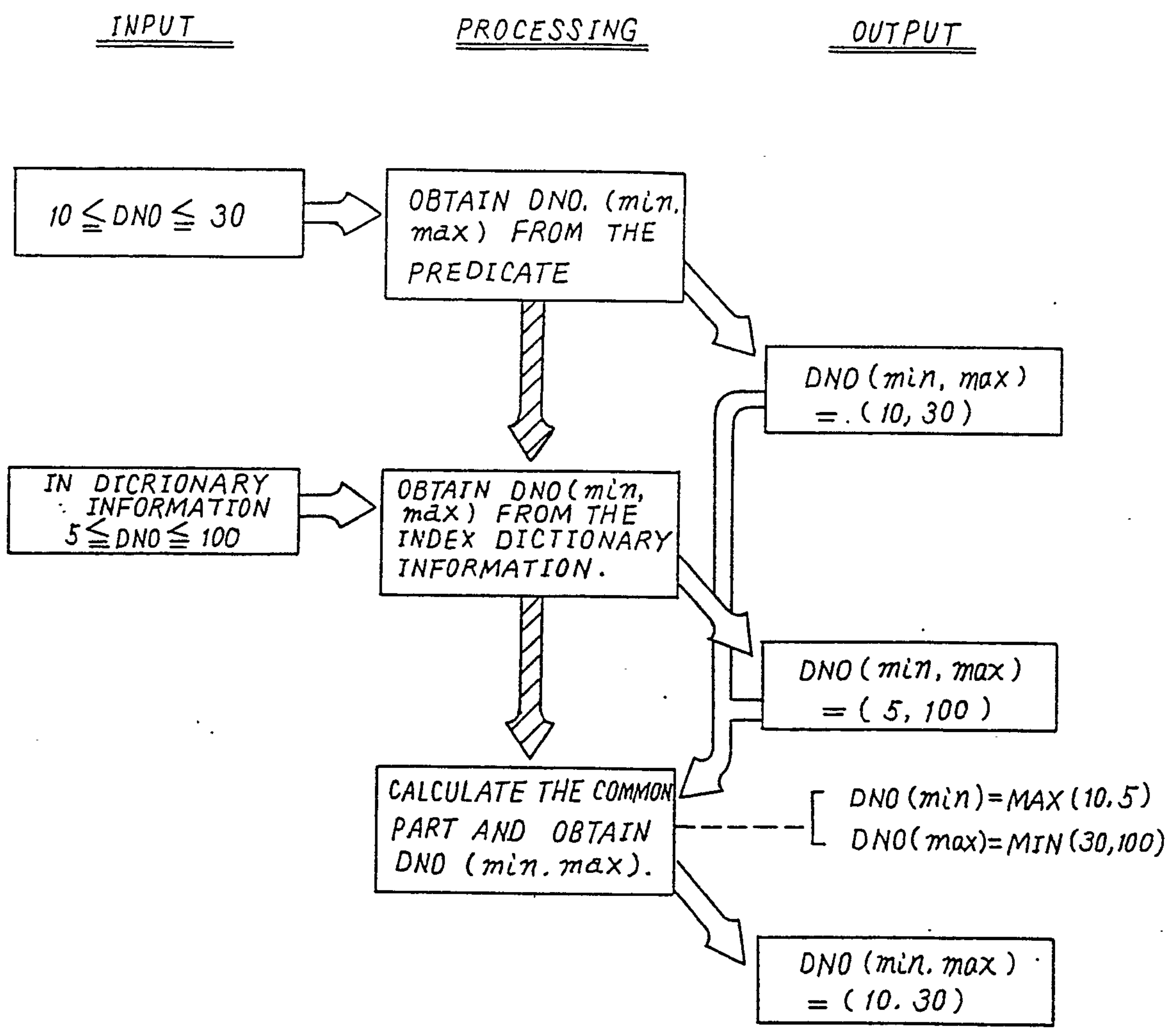
INPUT
PROCESSING
OUTPUT
10 ≦ DNO ≦ 30
OBTAIN DNO. (min. max) FROM THE PREDICATE
DNO (min, max) = . (10, 30)
IN DICRIONARY ∴ INFORMATION 5 ≦ DNO ≦ 100
OBTAIN DNO (min, max) FROM THE INDEX DICTIONARY INFORMATION.
DNO (min, max) = (5, 100)
CALCULATE THE COMMON PART AND OBTAIN DNO (min. max).
DNO (min) = MAX (10, 5)
DNO (max) = MIN (30, 100)
DNO (min. max) = (10. 30)

Fig. 6

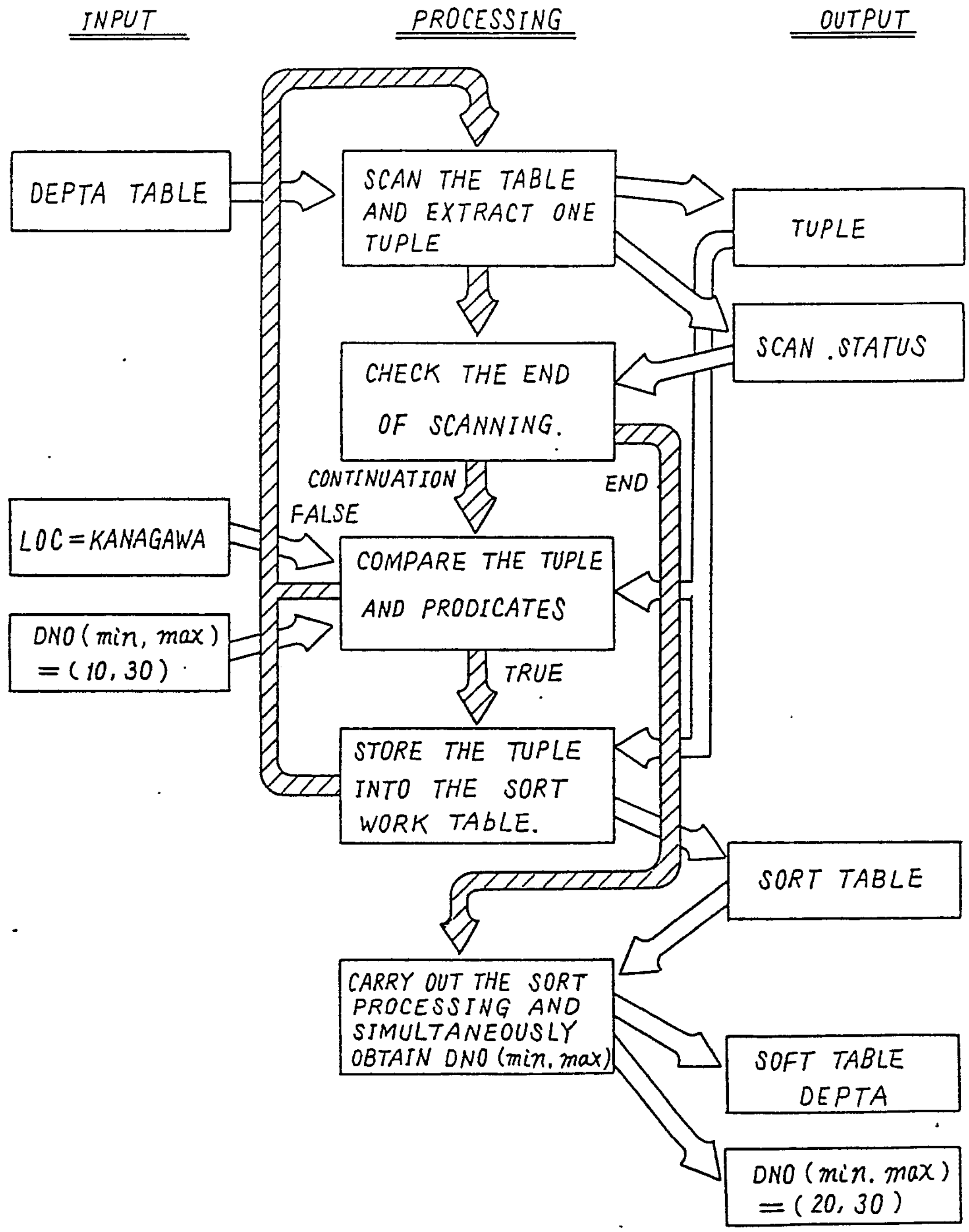
INPUT
PROCESSING
OUTPUT
DEPTA TABLE
SCAN THE TABLE AND EXTRACT ONE TUPLE
TUPLE
SCAN .STATUS
CHECK THE END OF SCANNING.
CONTINUATION
END
FALSE
LOC=KANAGAWA
COMPARE THE TUPLE AND PRODICATES
DNO (min, max) = (10, 30)
TRUE
STORE THE TUPLE INTO THE SORT WORK TABLE.
SORT TABLE
CARRY OUT THE SORT PROCESSING AND SIMULTANEOUSLY OBTAIN DNO (min, max)
SOFT TABLE DEPTA
DNO (min. max) = (20, 30)

Fig. 7 (A)

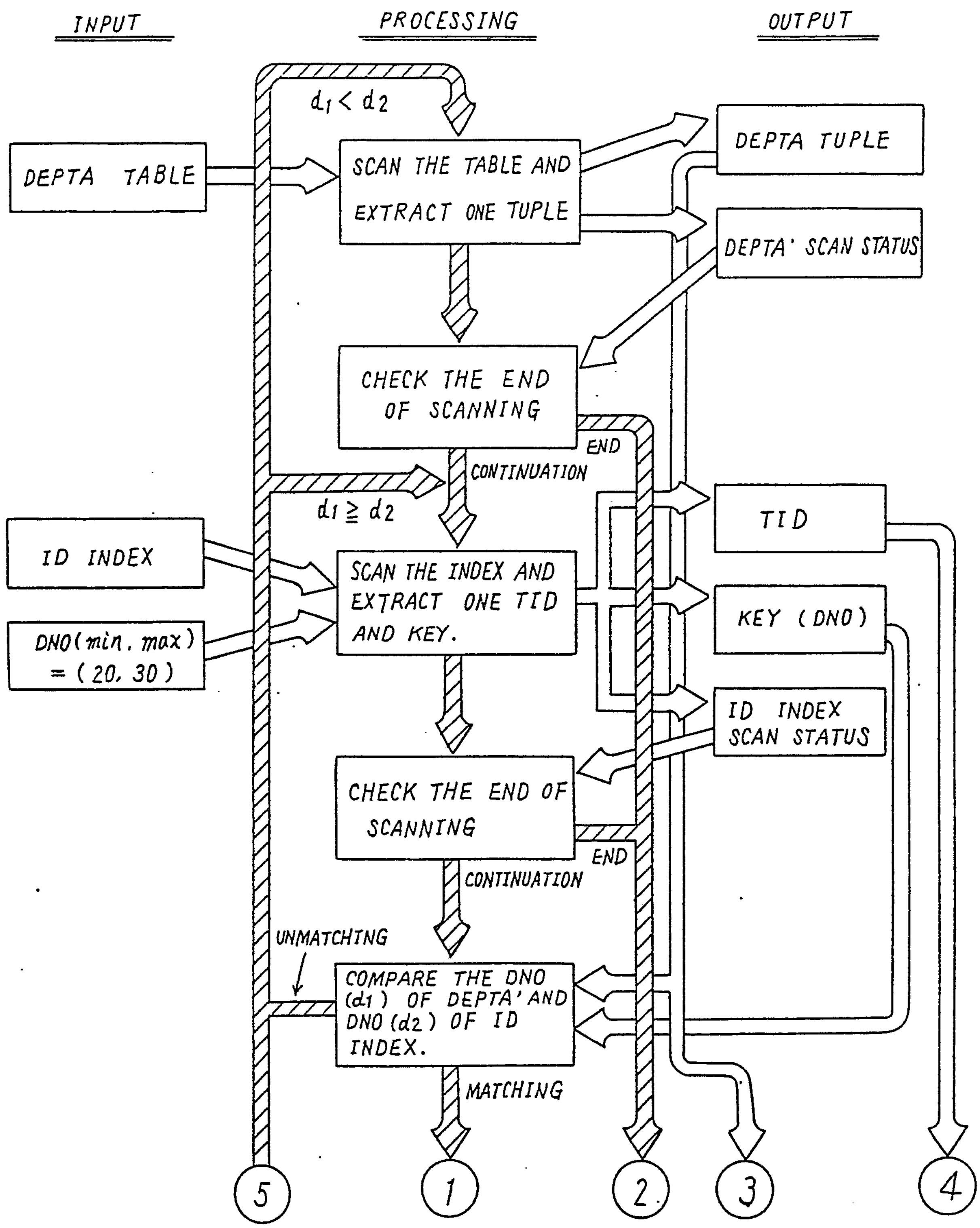
INPUT
PROCESSING
OUTPUT
d1 < d2
DEPTA TABLE
SCAN THE TABLE AND EXTRACT ONE TUPLE
DEPTA TUPLE
DEPTA' SCAN STATUS
CHECK THE END OF SCANNING
END
CONTINUATION
d1 ≧ d2
ID INDEX
DNO(min. max) = (20, 30)
SCAN THE INDEX AND EXTRACT ONE TID AND KEY.
TID
KEY (DNO)
ID INDEX SCAN STATUS
CHECK THE END OF SCANNING
END
CONTINUATION
UNMATCHING
COMPARE THE DNO (d1) OF DEPTA' AND DNO (d2) OF ID INDEX.
MATCHING
5
1
2
3
4

Fig. 7 (B)

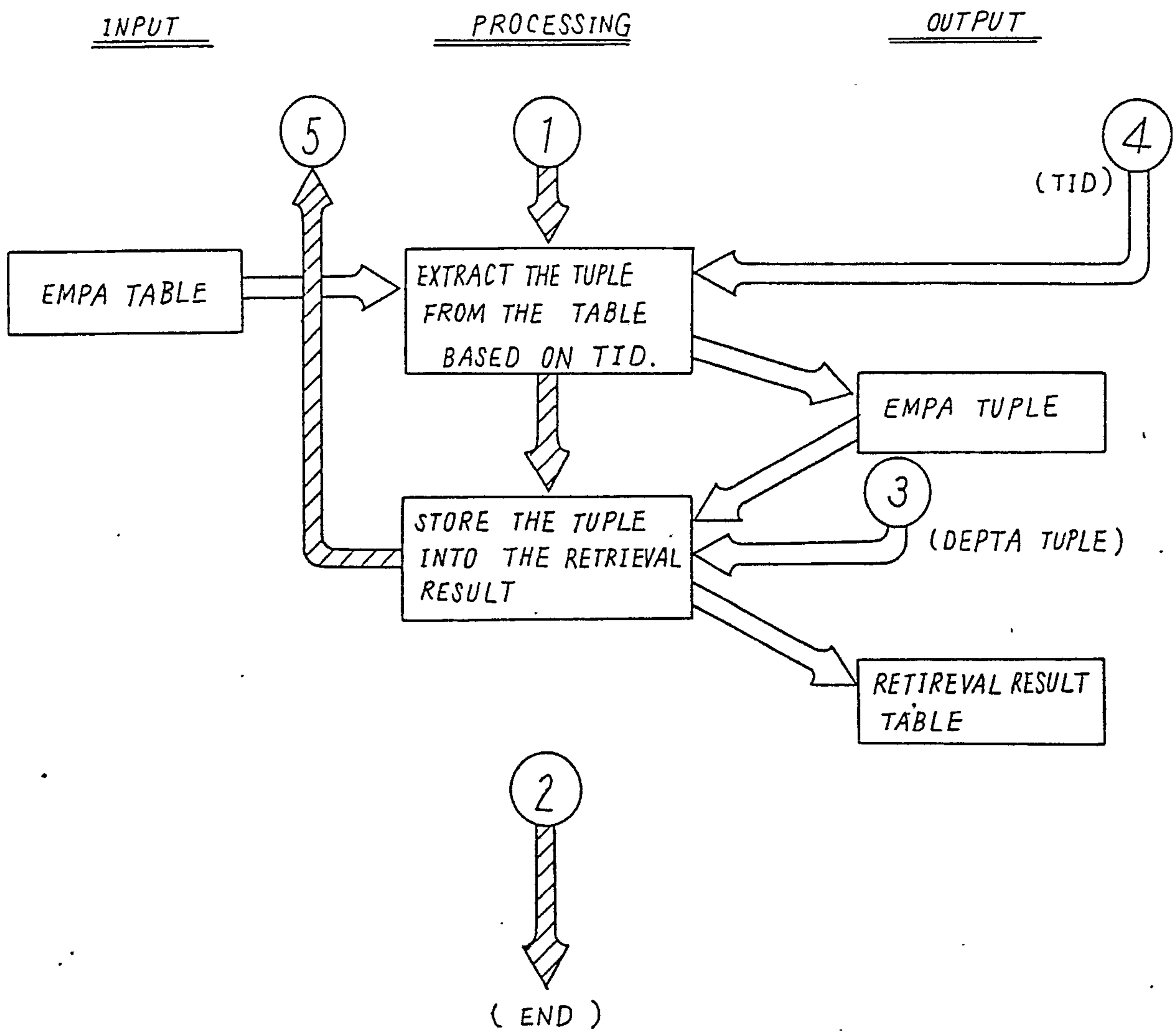
INPUT
PROCESSING
OUTPUT
5
1
4
(TID)
EMPA TABLE
EXTRACT THE TUPLE FROM THE TABLE BASED ON TID.
EMPA TUPLE
3
(DEPTA TUPLE)
STORE THE TUPLE INTO THE RETRIEVAL RESULT
RETIREVAL RESULT TABLE
2
( END )